# EUROPEAN PATENT APPLICATION

(11) **EP 4 780 062 A1**
(43) Date of publication of application: **22.07.2026**
(21) Application number: 25211859.1
(22) Date of filing: 28.10.2025
(51) Int. Cl.: H04W 28/02

(54) **METHODS AND APPARATUSES FOR EFFICIENT DELAY STATUS REPORTING IN MOBILE COMMUNICATIONS**

(30) Priority: 21.01.2025 US 202563747874 P; 03.10.2025 US 202519349599
(71) Applicant: HTC Corporation, Taoyuan City 330 (TW)
(72) Inventor: LEE, Yen-Yi, 330 Taoyuan City (TW)
(74) Representative: Schmidbauer, Andreas Konrad

(57) **Abstract**

Various solutions for efficient delay status reporting (DSR) in mobile communications are described. An apparatus may receive a configuration included in a MAC-CellGroupConfig information element (IE) of a radio resource control (RRC) signaling from a network node. The configuration may include a remaining time threshold for triggering a DSR procedure for one or more logical channels within a logical channel group (LCG), and a plurality of reporting thresholds on remaining time for reporting delay status information of the LCG. Then, the apparatus may trigger the DSR procedure for the one or more logical channels based on the remaining time threshold. Responsive to triggering the DSR procedure, the apparatus may transmit a DSR medium access control (MAC) control element (CE) to the network node, which includes a plurality of entries of delay status information of the LCG, each entry is associated with one of the plurality of reporting thresholds.

## Description

### TECHNICAL FIELD

The present disclosure is generally related to mobile communications and, more particularly, to efficient delay status reporting (DSR) in mobile communications.

### BACKGROUND

Unless otherwise indicated herein, approaches described in this section are not prior art to the claims listed below and are not admitted as prior art by inclusion in this section.

The wireless communications network has grown exponentially over the years. A long-term evolution (LTE) system offers high peak data rates, low latency, improved system capacity, and low operating cost resulting from simplified network architecture. LTE systems, also known as the 4^{th} generation (4G) system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipment (UE). Alternatively, a wireless network may include a hybrid of 2G/3G/4G systems. In 3^{rd} generation partner project (3GPP), the next generation mobile network (NGMN) board has decided to focus the future NGMN activities on defining the end-to-end requirements for 5^{th} generation (5G) new radio (NR) systems, 5G-advanced systems, and 6^{th} Generation (6G) systems.

In 3GPP Release 18 for 5G NR, the DSR procedure is introduced to provide the serving next generation Node-B (gNB) with delay status information of logical channel groups (LCGs) via a DSR medium access control (MAC) control element (CE). This reporting allows the delivery of delay-critical packet data convergence protocol (PDCP) service data units (SDUs) to be handled promptly as required by certain delay-sensitive services, such as extended reality (XR), remote control and teleoperation/telesurgery, industrial automation, and vehicle-to-everything (V2X) services. Based on the reported delay status information, the serving gNB may perform scheduling more efficiently and effectively to improve system capacity, e.g., by relaxing time constraints for resource allocation, while still meeting delay requirements (i.e., avoiding excessively late protocol data units (PDUs)). However, the current design of the DSR procedure may nevertheless exhibit inefficiencies with respect to uplink (UL) data and resource scheduling. For example, the DSR procedure is restricted to reporting only one pair of the remaining time (i.e., the shortest remaining value of all running PDCP discardTimers) and the buffer size (i.e., the total amount of delay-critical UL data) per LCG. As a result, the gNB is unaware of the remaining times of other PDCP SDUs associated with running PDCP discardTimers having longer remaining times. That is, the gNB is unable to obtain the delay status information with more details or with finer granularity regarding the delay-critical data buffered in the LCG. As such, this inevitably reduces the flexibility of UL data and resource scheduling.

Therefore, there is a need to provide proper schemes to address this issue.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is proposing schemes, concepts, designs, systems, methods, and/or apparatus pertaining to efficient DSR in mobile communications. It is believed that the above-described issue would be avoided or otherwise alleviated by implementing one or more of the proposed schemes described herein.

In one aspect, an apparatus may comprise a transceiver that, during operation, wirelessly communicates with a network node. The apparatus may also comprise a processor communicatively coupled to the transceiver. The processor, during operation, may perform operations comprising receiving, via the transceiver, a configuration comprised in a MAC-CellGroupConfig information element (IE) of a radio resource control (RRC) signaling from the network node, wherein the configuration comprises a remaining time threshold for triggering a DSR procedure for one or more logical channels within an LCG, and a plurality of reporting thresholds on remaining time for reporting delay status information of the LCG. The processor may also perform operations comprising triggering the DSR procedure for the one or more logical channels based on the remaining time threshold. The processor may further perform operations comprising transmitting, via the transceiver, a DSR MAC CE to the network node responsive to triggering the DSR procedure, wherein the DSR MAC CE comprises a plurality of entries of the delay status information of the LCG, each of the plurality of entries being associated with one of the plurality of reporting thresholds.

In one aspect, a network node may comprise a transceiver which, during operation, wirelessly communicates with an apparatus. The network node may also comprise a processor communicatively coupled to the transceiver. The processor, during operation, may perform operations comprising transmitting, via the transceiver, a configuration comprised in a MAC-CellGroupConfig IE of an RRC signaling to the apparatus, wherein the configuration comprises a remaining time threshold for triggering a DSR procedure for one or more logical channels within an LCG, and a plurality of reporting thresholds on remaining time for reporting delay status information of the LCG. The processor may further perform operations comprising receiving, via the transceiver, a DSR MAC CE from the apparatus in the DSR procedure, wherein the DSR MAC CE comprises a plurality of entries of the delay status information of the LCG, each of the plurality of entries being associated with one of the plurality of reporting thresholds.

It is noteworthy that, although description provided herein may be in the context of certain radio access technologies, networks and network topologies such as LTE, LTE-Advanced, LTE-Advanced Pro, 5G, NR, Internet-of-Things (IoT) and Narrow Band Internet of Things (NB-loT), Industrial Internet of Things (lloT), beyond 5G (B5G), and 6G, the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale, as some components may be shown to be out of proportion than the size in actual implementation in order to clearly illustrate the concept of the present disclosure.
FIG. 1 is a diagram depicting an example scenario of the format of a DSR MAC CE under current 5G NR framework.
FIG. 2 is a diagram depicting an example scenario of a communication environment in which various solutions and schemes in accordance with the present disclosure may be implemented.
FIG. 3 is a diagram depicting an example scenario of the enhanced DSR procedure in accordance with an implementation of the present disclosure.
FIG. 4 is a diagram depicting an example scenario of efficient delay status reporting via a DSR MAC CE in accordance with an implementation of the present disclosure.
FIG. 5 is a diagram depicting another example scenario of efficient delay status reporting via a DSR MAC CE in accordance with an implementation of the present disclosure.
FIG. 6 is a block diagram of an example communication system in accordance with an implementation of the present disclosure.
FIG. 7 is a flowchart of an example process in accordance with an implementation of the present disclosure.
FIG. 8 is a flowchart of another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes, and/or solutions pertaining to efficient DSR in mobile communications. According to the present disclosure, a number of possible solutions may be implemented separately or jointly. That is, although these possible solutions may be described below separately, two or more of these possible solutions may be implemented in one combination or another.

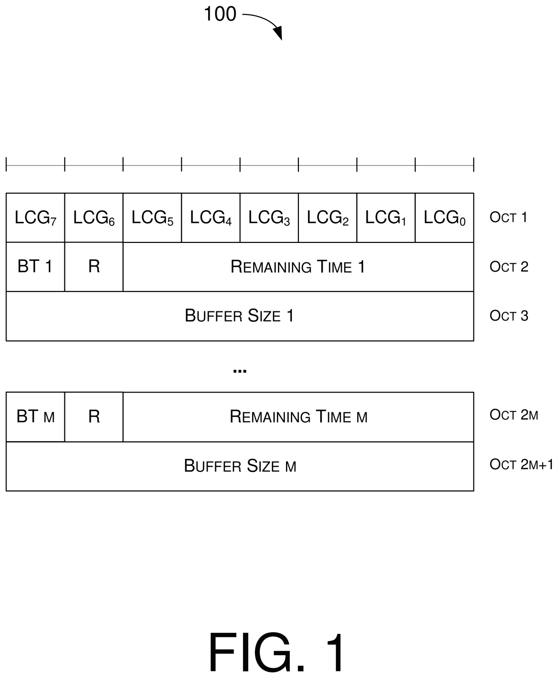

FIG. 1 illustrates an example scenario 100 of the format of a DSR MAC CE under current 5G NR framework. As shown in FIG. 1, a DSR MAC CE may carry delay status information for multiple LCGs (denoted as LCGi, where i=0-7), but the delay status information for an LCH includes only a single pair of a remaining time field and a buffer size field. The remaining time field indicates the shortest remaining time of the running PDCP discardTimers among all PDCP SDUs that are buffered for the LCG but have not been transmitted in any MAC PDU. The buffer size field indicates the total amount of delay-critical UL data for the LCG. Due to the restriction that only a single pair of the remaining time field and the buffer size field can be reported for each LCG (i.e., only one entry of delay status information is reported per LCG), the scheduling of UL data and resources may become inefficient and ineffective, as mentioned in the above-described issues.

In view of the above, the present disclosure proposes a number of schemes pertaining to efficient DSR in mobile communications. According to the schemes of the present disclosure, the DSR procedure is enhanced by configuring multiple reporting thresholds for an LCG and allowing a DSR MAC CE to contain multiple entries of delay status information of the LCG, where each entry is associated with one of the reporting thresholds. Specifically, each entry may include a pair of the remaining time field and the buffer size field associated with one reporting threshold. Accordingly, by applying the schemes of the present disclosure, the reported delay status information may include more detailed information (e.g., the distribution of the remaining times) of the delay-critical data, thereby improving the efficiency and effectiveness of UL data and resource scheduling.

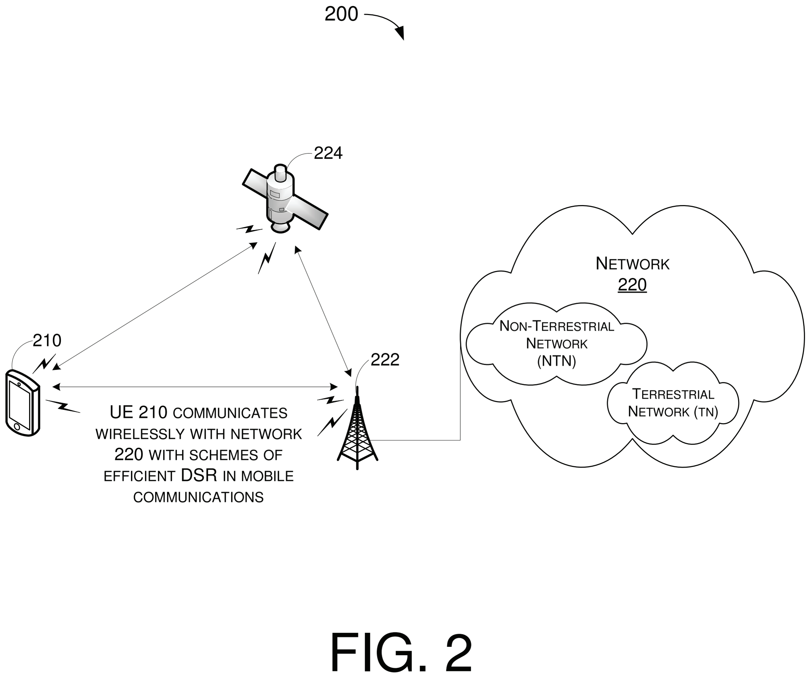

FIG. 2 illustrates an example scenario 200 of a communication environment in which various solutions and schemes in accordance with the present disclosure may be implemented. Scenario 200 involves a UE 210 in wireless communication with a network 220 (e.g., a wireless network including a non-terrestrial network (NTN) and a TN) via at least a terrestrial network node 222 (e.g., a base station (BS) such as an eNB, a gNB, or a transmission/reception point (TRP)) and/or at least a non-terrestrial network node 224 (e.g., a satellite). For example, the terrestrial network node 222 may form a TN serving cell for wireless communication with the UE 210, or the terrestrial network node 222 and the non-terrestrial network node 224 may form an NTN serving cell for wireless communication with the UE 210. In some implementations, the network 220 may be a 4G/5G/B5G/6G network, and the UE 210 may be a smartphone, a tablet computer, a laptop computer, or a notebook computer. Alternatively, the network 220 may be an loT/ NB-loT/lloT network, and the UE 210 may be an loT device such as an NB-loT UE or an enhanced machine-type communication (eMTC) UE (e.g., a bandwidth reduced low complexity (BL) UE or a coverage enhancement (CE) UE). In such communication environment, the UE 210, the network 220, the terrestrial network node 222, and/or the non-terrestrial network node 224 may implement various schemes pertaining to efficient DSR in mobile communications in accordance with the present disclosure, as described below. It is noteworthy that, while the various proposed schemes may be individually or separately described below, in actual implementations, some or all of the proposed schemes may be utilized or otherwise implemented jointly. Of course, each of the proposed schemes may be utilized or otherwise implemented individually or separately.

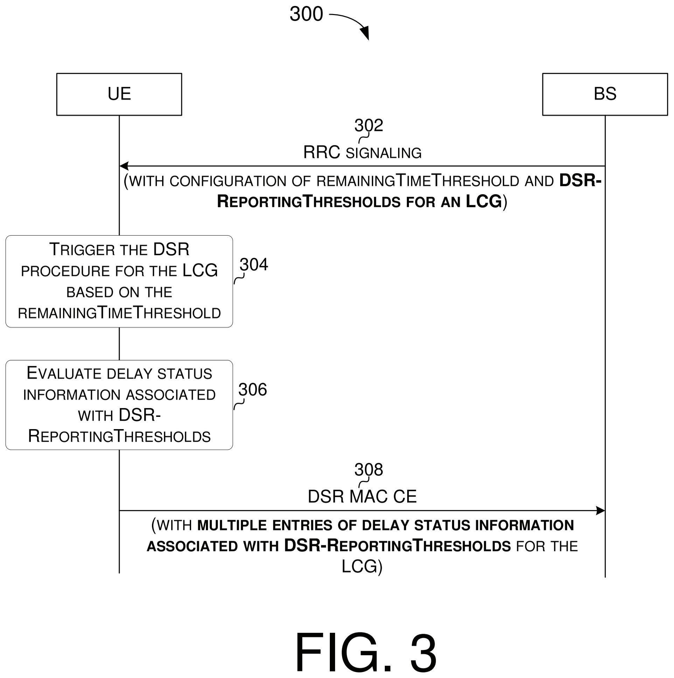

FIG. 3 illustrates an example scenario 300 of the enhanced DSR procedure in accordance with an implementation of the present disclosure. In step 302, the UE receives an RRC signaling from the BS. Specifically, the RRC signaling includes the configuration of a remaining time threshold (denoted as remainingTimeThreshold in FIG. 3) for triggering the DSR procedure for the logical channel(s) within an LCG, and multiple reporting thresholds (denoted as DSR-ReportingThresholds in FIG. 3) on remaining time for reporting delay status information of the LCG. The data (e.g., each PDCP SDU) of a logical channel is associated with a discard timer (e.g., PDCP discardTimer), and if the remaining time of the discard timer is less than the remaining time threshold, the data is considered as delay-critical data. If the data does not get transmitted before the discard timer expires, then the data is discarded. The reporting thresholds may be provided as a list of thresholds (e.g., called DSR-reportingThresList) on remaining time for reporting the amount of UL data buffered in an LCG. In one example, the reporting thresholds may be configured in ascending order (e.g., DSR-ReportingThreshold#1=3 milliseconds (ms), DSR-ReportingThreshold#2=5 ms, and DSR-ReportingThreshold#3=12 ms, etc.). The configuration may be contained in a MAC-CellGroupConfig IE of the RRC signaling.

Next, in step 304, the UE triggers the DSR procedure for the logical channel(s) belonging to the LCG (i.e., the DSR procedure is triggered for the LCG) based on the remaining time threshold. Specifically, the DSR procedure is triggered when at least one logical channel within the LCG carries data with a remaining time of an associated PDCP discard timer less than the remaining time threshold. In step 306, the UE evaluates the delay status information associated with the reporting thresholds. Specifically, for each logical channel of the LCG, the UE may check if the shortest remaining time of the running PDCP discardTimers among all the PDCP SDUs buffered for the logical channel becomes below any of the reporting thresholds, and if so, calculates the total amount of delay-critical data associated with the reporting threshold. In step 308, the UE transmits a DSR MAC CE including multiple entries of delay status information associated with the reporting thresholds for the LCG to the BS. Such DSR MAC CE is also called a Multiple Entry DSR MAC CE.

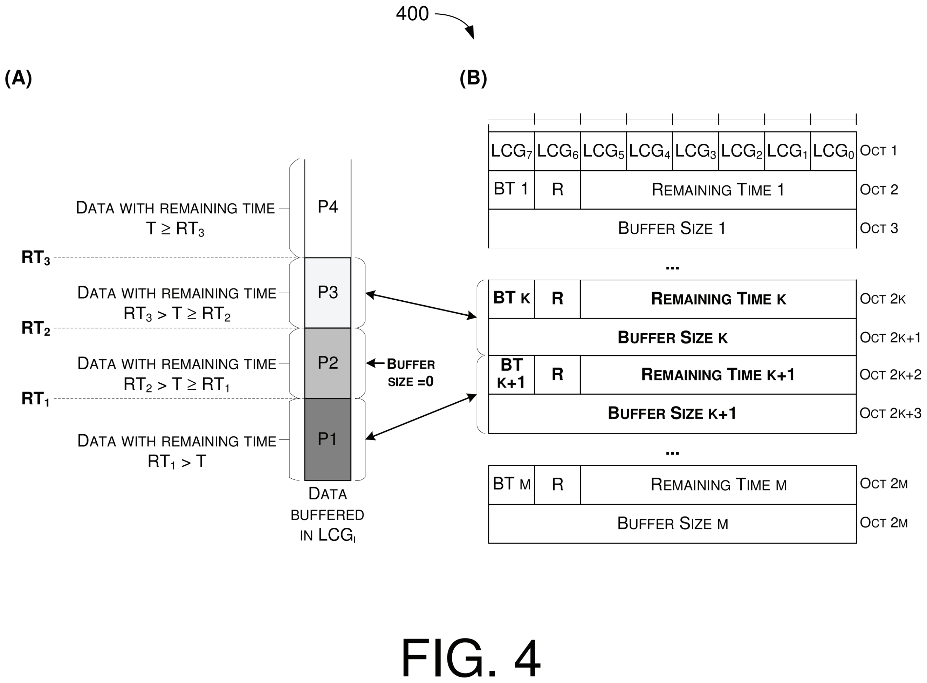

FIG. 4 illustrates an example scenario 400 of efficient delay status reporting via a DSR MAC CE in accordance with an implementation of the present disclosure. Part (A) of FIG. 4 shows the buffer status for LCGᵢ, wherein the buffered PDCP SDUs that have not been transmitted in any MAC PDU are divided into multiple groups (e.g., 3 groups) based on the reporting thresholds (denoted as RT₁ to RT₃, where RT₁ < RT₂ < RT₃) configured for the LCGᵢ. For example, group P1 contains the PDCP SDUs with remaining time T smaller than the first reporting threshold (i.e., RT₁), group P2 contains the PDCP SDUs with remaining time T greater than or equal to the first reporting threshold (i.e., RT₁) and smaller than the second reporting threshold (i.e., RT₂), group P3 contains the PDCP SDUs with remaining time T greater than or equal to the second reporting threshold (i.e., RT₂) and smaller than the third reporting threshold (i.e., RT₃), and group P4 contains the PDCP SDUs with remaining time T greater than or equal to the third reporting threshold (i.e., RT₃). Part (B) of FIG. 4 shows a DSR MAC CE containing multiple entries of delay status information of the LCGᵢ, and each entry is associated with one of the reporting thresholds configured for the LCG. Specifically, for group P1, there may be a corresponding entry of delay status information to be reported in the DSR MAC CE, and the corresponding entry may include a pair of a buffer size field and a remaining time field, where the buffer size field indicates the total amount of delay-reporting data in all DSR-triggered logical channels with remaining time smaller than RT₁, and the remaining time field indicates the shortest remaining value of running PDCP discardTimers among all PDCP SDUs in all DSR-triggered logical channels with remaining time smaller than RT₁. For group P2, there may be a corresponding entry of delay status information to be reported in the DSR MAC CE, and the corresponding entry may include a pair of a buffer size field and a remaining time field, where the buffer size field indicates the total amount of delay-reporting data in all DSR-triggered logical channels with remaining time greater than or equal to RT₁ and smaller than RT₂, and the remaining time field indicates the shortest remaining value of running PDCP discardTimers among all PDCP SDUs in all DSR-triggered logical channels with remaining time greater than or equal to RT₁ and smaller than RT₂. For group P3, there may be a corresponding entry of delay status information to be reported in the DSR MAC CE, and the corresponding entry may include a pair of a buffer size field and a remaining time field, where the buffer size field indicates the total amount of delay-reporting data in all DSR-triggered logical channels with remaining time greater than or equal to RT₂ and smaller than RT₃, and the remaining time field indicates the shortest remaining value of running PDCP discardTimers among all PDCP SDUs in all DSR-triggered logical channels with remaining time greater than or equal to RT₂ and smaller than RT₃. For group P4, there may be no entry of delay status information to be reported in the DSR MAC CE, since all data in group P4 is with remaining time greater than or equal to RT3.

In some implementations, only the delay status information with positive buffer size (i.e., buffer size > 0) may be reported in the DSR MAC CE for the LCGᵢ. For example, as shown in FIG. 4, it is assumed that the buffer size corresponding to group P2 is zero, and thus, no entry associated with RT₂ is reported for the LCGᵢ in the DSR MAC CE. That is, in this example, only two entries of delay status information are reported for the LCGᵢ in the DSR MAC CE, including one entry associated with RT₁ and one entry associated with RT₃.

In some implementations, the entry of delay status information associated with a smaller reporting threshold may be reported in higher octets, and the entry of delay status information associated with a larger reporting threshold may be reported in lower octets. For example, as shown in FIG. 4, the entry of delay status information associated with RT₁ is reported in octet 2k+2 and octet 2k+3, while the entry of delay status information associated with RT₃ is reported in octet 2k and octet 2k+1.

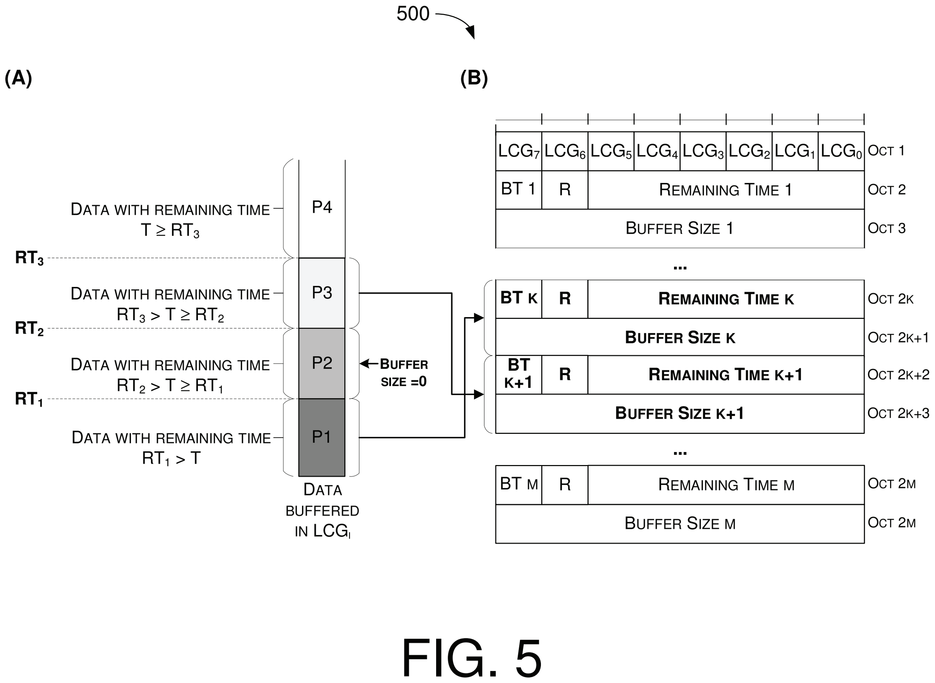

FIG. 5 illustrates an example scenario 500 of efficient delay status reporting via a DSR MAC CE in accordance with an implementation of the present disclosure. Scenario 500 depicts a case similar to scenario 400, except that the entry of delay status information associated with a larger reporting threshold may be reported in higher octets, and the entry of delay status information associated with a smaller reporting threshold may be reported in lower octets. Specifically, as shown in FIG. 5, the entry of delay status information associated with RT₃ is reported in octet 2k+2 and octet 2k+3, while the entry of delay status information associated with RT₁ is reported in octet 2k and octet 2k+1.

In some implementations, the delay status information for different LCGs may be included in the DSR MAC CE in an ascending order based on LCG fields corresponding to the different LCGs, wherein each of the LCG fields indicates whether the delay status information for one LCG is present.

### Illustrative Implementations

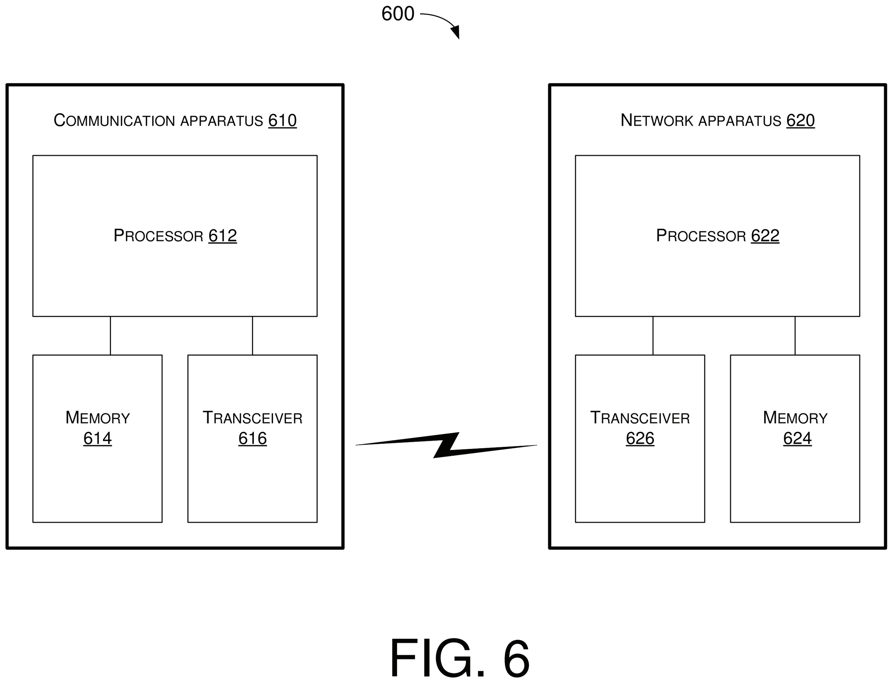

FIG. 6 illustrates an example communication system 600 having an example communication apparatus 610 and an example network apparatus 620 in accordance with an implementation of the present disclosure. Each of communication apparatus 610 and network apparatus 620 may perform various functions to implement schemes, techniques, processes, and methods described herein pertaining to efficient DSR in mobile communications, including scenarios/schemes described above as well as processes 700 and 800 described below.

Communication apparatus 610 may be a part of an electronic apparatus, which may be a dual-steer device containing one or more UEs such as a portable or mobile apparatus, a wearable apparatus, a wireless communication apparatus, or a computing apparatus. For instance, communication apparatus 610 may be implemented in a smartphone, a smartwatch, a personal digital assistant, an electronic control unit (ECU) in a vehicle, a digital camera, or a computing equipment such as a tablet computer, a laptop computer, or a notebook computer. Communication apparatus 610 may also be a part of a machine type apparatus, which may be an loT, NB-loT, eMTC, IloT UE, such as an immobile or a stationary apparatus, a home apparatus, a roadside unit (RSU), a wire communication apparatus, or a computing apparatus. For instance, communication apparatus 610 may be implemented in a smart thermostat, a smart fridge, a smart door lock, a wireless speaker, or a home control center. Alternatively, communication apparatus 610 may be implemented in the form of one or more integrated-circuit (IC) chips, such as, for example and without limitation, one or more single-core processors, one or more multi-core processors, one or more reduced-instruction-set computing (RISC) processors, or one or more complex-instruction-set-computing (CISC) processors. Communication apparatus 610 may include at least some of those components shown in FIG. 6, such as a processor 612, for example. Communication apparatus 610 may further include one or more other components not pertinent to the proposed schemes of the present disclosure (e.g., internal power supply, display device and/or user interface device), and, thus, such component(s) of communication apparatus 610 are neither shown in FIG. 6 nor described below in the interest of simplicity and brevity.

Network apparatus 620 may be a part of an electronic apparatus, which may be a network node such as a satellite, a BS, a small cell, a router, or a gateway of a 4G/5G/B5G/6G, NR, loT, NB-loT, or IloT network. Alternatively, network apparatus 620 may be implemented in the form of one or more IC chips, such as, for example and without limitation, one or more single-core processors, one or more multi-core processors, or one or more RISC or CISC processors. Network apparatus 620 may include at least some of those components shown in FIG. 6, such as a processor 622, for example. Network apparatus 620 may further include one or more other components not pertinent to the proposed scheme of the present disclosure (e.g., internal power supply, display device and/or user interface device), and, thus, such component(s) of network apparatus 620 are neither shown in FIG. 6 nor described below in the interest of simplicity and brevity.

In one aspect, each of processor 612 and processor 622 may be implemented in the form of one or more single-core processors, one or more multi-core processors, or one or more CISC processors. That is, even though a singular term "a processor" is used herein to refer to processor 612 and processor 622, each of processor 612 and processor 622 may include multiple processors in some implementations and a single processor in other implementations in accordance with the present disclosure. In another aspect, each of processor 612 and processor 622 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 612 and processor 622 is a special-purpose machine specifically designed, arranged and configured to perform specific tasks in a device (e.g., as represented by communication apparatus 610) and a network node (e.g., as represented by network apparatus 620) in accordance with various implementations of the present disclosure.

In some implementations, communication apparatus 610 may also include a transceiver 616 coupled to processor 612 and capable of wirelessly transmitting and receiving data. In some implementations, transceiver 616 may be capable of wirelessly communicating with different types of UEs and/or wireless networks of different RATs. In some implementations, transceiver 616 may be equipped with a plurality of antenna ports (not shown) such as, for example, four antenna ports. That is, transceiver 616 may be equipped with multiple transmit antennas and multiple receive antennas for multiple-input multiple-output (MIMO) wireless communications. In some implementations, network apparatus 620 may also include a transceiver 626 coupled to processor 622. Transceiver 626 may include a transceiver capable of wirelessly transmitting and receiving data. In some implementations, transceiver 626 may be capable of wirelessly communicating with different types of UEs of different RATs. In some implementations, transceiver 626 may be equipped with a plurality of antenna ports (not shown) such as, for example, four antenna ports. That is, transceiver 626 may be equipped with multiple transmit antennas and multiple receive antennas for MIMO wireless communications.

In some implementations, communication apparatus 610 may further include a memory 614 coupled to processor 612 and capable of being accessed by processor 612 and storing data therein. In some implementations, network apparatus 620 may further include a memory 624 coupled to processor 622 and capable of being accessed by processor 622 and storing data therein. Each of memory 614 and memory 624 may include a type of random-access memory (RAM) such as dynamic RAM (DRAM), static RAM (SRAM), thyristor RAM (TRAM), and/or zero-capacitor RAM (Z-RAM). Alternatively, or additionally, each of memory 614 and memory 624 may include a type of read-only memory (ROM) such as mask ROM, programmable ROM (PROM), erasable programmable ROM (EPROM), and/or electrically erasable programmable ROM (EEPROM). Alternatively, or additionally, each of memory 614 and memory 624 may include a type of non-volatile random-access memory (NVRAM) such as flash memory, solid-state memory, ferroelectric RAM (FeRAM), magnetoresistive RAM (MRAM), and/or phase-change memory.

Each of communication apparatus 610 and network apparatus 620 may be a communication entity capable of communicating with each other using various proposed schemes in accordance with the present disclosure. For illustrative purposes and without limitation, a description of capabilities of communication apparatus 610, as a UE, and network apparatus 620, as a network node (e.g., BS), is provided below with processes 700 and 800.

### Illustrative Processes

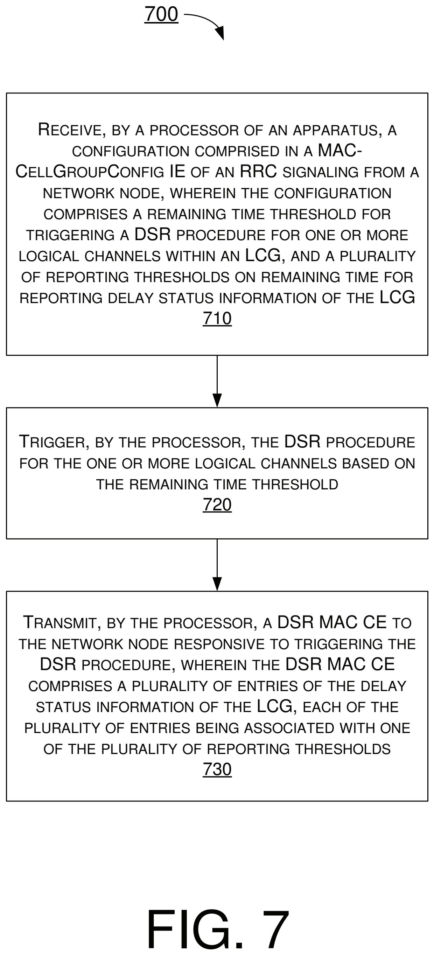

FIG. 7 illustrates an example process 700 in accordance with an implementation of the present disclosure. Process 700 may be an example implementation of above scenarios/schemes, whether partially or completely, with respect to efficient DSR in mobile communications. Process 700 may represent an aspect of implementation of features of communication apparatus 610. Process 800 may include one or more operations, actions, or functions as illustrated by one or more of blocks 710 to 730. Although illustrated as discrete blocks, various blocks of process 700 may be divided into additional blocks, combined into fewer blocks, or eliminated, depending on the desired implementation. Moreover, the blocks of process 700 may be executed in the order shown in FIG. 7 or, alternatively in a different order. Process 700 may be implemented by or in communication apparatus 610 or any suitable UE or machine type device. Solely for illustrative purposes and without limiting the scope, process 700 is described below in the context of communication apparatus 610, as a UE, and network apparatus 620, as a network node (e.g., a BS such as gNB). Process 700 may begin at block 710.

At block 710, process 700 may involve processor 612 of communication apparatus 610, receiving, via transceiver 616, a configuration from network apparatus 620, wherein the configuration comprises a remaining time threshold for triggering a DSR procedure for one or more logical channels within an LCG, and a plurality of reporting thresholds on remaining time for reporting delay status information of the LCG. Process 700 may proceed from block 710 to block 720.

At block 720, process 700 may involve processor 612 triggering the DSR procedure for the one or more logical channels based on the remaining time threshold. Process 700 may proceed from block 720 to block 730.

At block 730, process 700 may involve processor 612 transmitting, via transceiver 616, a DSR MAC CE to network apparatus 620 responsive to triggering the DSR procedure, wherein the DSR MAC CE comprises a plurality of entries of the delay status information of the LCG, each of the plurality of entries being associated with one of the plurality of reporting thresholds.

In some implementations, the configuration may further include a DSR reporting threshold list, and the plurality of reporting thresholds may be configured in an ascending order in the DSR reporting threshold list.

In some implementations, each of the plurality of entries of the delay status information may include a pair of a remaining time field and a buffer size field.

In some implementations, for each of the plurality of entries of the delay status information, the remaining time field may indicate a shortest remaining time of running PDCP discard timers among all PDCP SDUs that have not been transmitted in any MAC PDU and are associated with the one of the plurality of reporting thresholds, and the buffer size field may indicate a total amount of delay-reporting data associated with the one of the plurality of reporting thresholds.

In some implementations, each of the running PDCP discard timers may have a remaining time smaller than the one of the plurality of reporting thresholds.

In some implementations, the delay-reporting data may be associated with PDCP discard timers each having a remaining time smaller than the one of the plurality of reporting thresholds.

In some implementations, only the delay status information with the buffer size field having a positive value may be reported in the DSR MAC CE.

In some implementations, each of the plurality of entries of the delay status information may be reported in two consecutive octets of the DSR MAC CE.

In some implementations, the plurality of entries of the delay status information may be reported consecutively in an ascending order based on values of the plurality of reporting thresholds.

In some implementations, the delay status information for different LCGs may be included in the DSR MAC CE in an ascending order based on LCG fields corresponding to the different LCGs, wherein each of the LCG fields indicates whether the delay status information for one LCG is present.

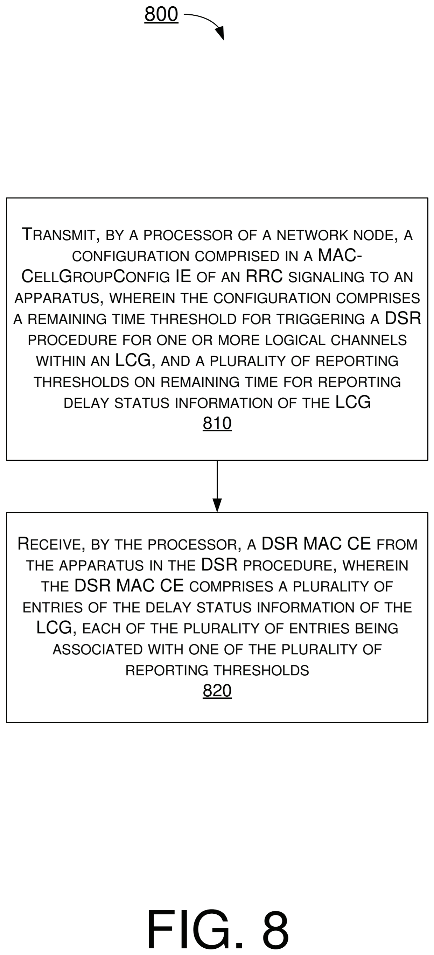

FIG. 8 illustrates an example process 800 in accordance with an implementation of the present disclosure. Process 800 may be an example implementation of above scenarios/schemes, whether partially or completely, with respect to efficient DSR in mobile communications. Process 800 may represent an aspect of implementation of features of network apparatus 620. Process 800 may include one or more operations, actions, or functions as illustrated by one or more of blocks 810 to 820. Although illustrated as discrete blocks, various blocks of process 800 may be divided into additional blocks, combined into fewer blocks, or eliminated, depending on the desired implementation. Moreover, the blocks of process 800 may be executed in the order shown in FIG. 8 or, alternatively in a different order. Process 800 may be implemented by or in network apparatus 620 as well as any variations thereof. Solely for illustrative purposes and without limiting the scope, process 800 is described below in the context of communication apparatus 610, as a UE, and network apparatus 620, as a network node (e.g., a BS such as gNB). Process 800 may begin at block 810.

At block 810, process 800 may involve processor 622 of network apparatus 620, transmitting, via transceiver 626, a configuration to communication apparatus 610, wherein the configuration comprises a remaining time threshold for triggering a DSR procedure for one or more logical channels within an LCG, and a plurality of reporting thresholds on remaining time for reporting delay status information of the LCG. Process 800 may proceed from block 810 to block 820.

At block 820, process 800 may involve processor 622 receiving, via transceiver 626, a DSR MAC CE from communication apparatus 610 in the DSR procedure, wherein the DSR MAC CE comprises a plurality of entries of the delay status information of the LCG, each of the plurality of entries being associated with one of the plurality of reporting thresholds.

In some implementations, the configuration may further include a DSR reporting threshold list, and the plurality of reporting thresholds may be configured in an ascending order in the DSR reporting threshold list.

In some implementations, each of the plurality of entries of the delay status information may include a pair of a remaining time field and a buffer size field.

In some implementations, for each of the plurality of entries of the delay status information, the remaining time field may indicate a shortest remaining time of running PDCP discard timers among all PDCP SDUs that have not been transmitted in any MAC PDU and are associated with the one of the plurality of reporting thresholds, and the buffer size field may indicate a total amount of delay-reporting data associated with the one of the plurality of reporting thresholds.

In some implementations, each of the running PDCP discard timers may have a remaining time smaller than the one of the plurality of reporting thresholds.

In some implementations, the delay-reporting data may be associated with PDCP discard timers each having a remaining time smaller than the one of the plurality of reporting thresholds.

In some implementations, only the delay status information with the buffer size field having a positive value may be reported in the DSR MAC CE.

In some implementations, each of the plurality of entries of the delay status information may be reported in two consecutive octets of the DSR MAC CE.

In some implementations, the plurality of entries of the delay status information may be reported consecutively in an ascending order based on values of the plurality of reporting thresholds.

In some implementations, the delay status information for different LCGs may be included in the DSR MAC CE in an ascending order based on LCG fields corresponding to the different LCGs, wherein each of the LCG fields indicates whether the delay status information for one LCG is present.

In light of the above-described embodiments, it is noteworthy that, by applying the schemes of the present disclosure, the DSR procedure is enhanced by configuring multiple reporting thresholds for an LCG and allowing a DSR MAC CE to contain multiple entries of delay status information for an LCG with each entry associated with one reporting threshold. Accordingly, the enhanced DSR procedure may efficiently report delay status information with more details and/or with finer granularity regarding the delay-critical data buffered in the LCG, thereby improving the efficiency and effectiveness of UL data and resource scheduling.

### Additional Notes

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. An apparatus, comprising:
a transceiver which, during operation, wirelessly communicates with a network node; and
a processor communicatively coupled to the transceiver such that, during operation, the processor performs operations comprising:
receiving, via the transceiver, a configuration comprised in a MAC-CellGroupConfig information element (IE) of a radio resource control (RRC) signaling from the network node, wherein the configuration comprises a remaining time threshold for triggering a delay status reporting (DSR) procedure for one or more logical channels within a logical channel group (LCG), and a plurality of reporting thresholds on remaining time for reporting delay status information of the LCG;
triggering the DSR procedure for the one or more logical channels based on the remaining time threshold; and
transmitting, via the transceiver, a DSR medium access control (MAC) control element (CE) to the network node responsive to triggering the DSR procedure, wherein the DSR MAC CE comprises a plurality of entries of the delay status information of the LCG, each of the plurality of entries being associated with one of the plurality of reporting thresholds.

2. The apparatus of Claim 1, wherein the configuration further comprises a DSR reporting threshold list, and the plurality of reporting thresholds are configured in an ascending order in the DSR reporting threshold list.

3. The apparatus of Claim 1, wherein each of the plurality of entries of the delay status information comprises a pair of a remaining time field and a buffer size field.

4. The apparatus of Claim 3, wherein for each of the plurality of entries of the delay status information, the remaining time field indicates a shortest remaining time of running packet data convergence protocol (PDCP) discard timers among all PDCP service data units (SDUs) that have not been transmitted in any MAC protocol data unit (PDU) and are associated with the one of the plurality of reporting thresholds, and the buffer size field indicates a total amount of delay-reporting data associated with the one of the plurality of reporting thresholds.

5. The apparatus of Claim 4, wherein each of the running PDCP discard timers has a remaining time smaller than the one of the plurality of reporting thresholds.

6. The apparatus of Claim 4, wherein the delay-reporting data is associated with PDCP discard timers each having a remaining time smaller than the one of the plurality of reporting thresholds.

7. The apparatus of Claim 3, wherein only the delay status information with the buffer size field having a positive value is reported in the DSR MAC CE.

8. The apparatus of Claim 1, wherein each of the plurality of entries of the delay status information is reported in two consecutive octets of the DSR MAC CE.

9. The apparatus of Claim 1, wherein the plurality of entries of the delay status information are reported consecutively in an ascending order based on values of the plurality of reporting thresholds.

10. The apparatus of Claim 1, wherein the delay status information for different LCGs is comprised in the DSR MAC CE in an ascending order based on LCG fields corresponding to the different LCGs, and each of the LCG fields indicates whether the delay status information for one LCG is present.

11. A network node, comprising:
a transceiver which, during operation, wirelessly communicates with an apparatus; and
a processor communicatively coupled to the transceiver such that, during operation, the processor performs operations comprising:
transmitting, via the transceiver, a configuration comprised in a MAC-CellGroupConfig information element (IE) of a radio resource control (RRC) signaling to the apparatus, wherein the configuration comprises a remaining time threshold for triggering a delay status reporting (DSR) procedure for one or more logical channels within a logical channel group (LCG), and a plurality of reporting thresholds on remaining time for reporting delay status information of the LCG; and
receiving, via the transceiver, a DSR medium access control (MAC) control element (CE) from the apparatus in the DSR procedure, wherein the DSR MAC CE comprises a plurality of entries of the delay status information of the LCG, each of the plurality of entries being associated with one of the plurality of reporting thresholds.

12. The network node of Claim 11, wherein the configuration further comprises a DSR reporting threshold list, and the plurality of reporting thresholds are configured in an ascending order in the DSR reporting threshold list, wherein each of the plurality of entries of the delay status information comprises a pair of a remaining time field and a buffer size field.

13. The network node of Claim 11, wherein each of the plurality of entries of the delay status information is reported in two consecutive octets of the DSR MAC CE.

14. The network node of Claim 11, wherein the plurality of entries of the delay status information are reported consecutively in an ascending order based on values of the plurality of reporting thresholds.

15. The network node of Claim 11, wherein the delay status information for different LCGs is comprised in the DSR MAC CE in an ascending order based on LCG fields corresponding to the different LCGs, and each of the LCG fields indicates whether the delay status information for one LCG is present.
